# EUROPEAN PATENT APPLICATION

(11) **EP 0 785 675 A2**
(43) Date of publication of application: **23.07.1997**
(21) Application number: 97300246.2
(22) Date of filing: 16.01.1997
(51) Int. Cl.: H04N 5/44, H04N 7/24

(54) **Digital signal receiver**

(30) Priority: 16.01.1996 JP 4889/96
(71) Applicant: KABUSHIKI KAISHA TOSHIBA, Kawasaki-shi (JP)
(72) Inventor: Tomonaga, Eiichiro, 1-1-1, Shibaura,Minato-ku Tokyo (JP); Yamada, Masahiro, 1-1-1, Shibaura,Minato-ku Tokyo (JP); Sakamoto, Noriya, 1-1-1, Shibaura,Minato-ku Tokyo (JP)
(74) Representative: Muir, Ian R.

(57) **Abstract**

Digital signal receiver for recording a plurality of program streams at the same time period with a single storage medium. The transport streams from the tuners T11 through T1n are converted into the program streams at the format conversion circuits F11 through F1n, then converted into the data forms corresponding to the data bus 5 in the data bus interfaces IF11 through IF1n, so as to output them to the data bus 5. Therefore, the data having a plurality of programs at the same time are transmitted on the data bus 5 in a multiplexed state. The data bus interface circuit 6 restores the data from the data bus 5 into the original data and supplies it to the storage medium 7. Accordingly, the storage medium 7 is able to record the program streams of a plurality of programs at the same time period.

## Description

The present invention relates to a digital signal receiver that is suited for recording the digital data transmitted by using the transport streams which is possible to transmit the multi-programs.

Recently, digital processings of image data or audio data have become widespread. The digitization is employed in systems for television broadcasting and television conference, for transmitting a moving picture or sound such as a video telephone, or for recording the moving picture or sound in a magnetic disc, optical disc or magnetic tape and reproducing them. In these systems a high efficiency coding is adapted to make good use of channels and recording media.

As the high efficiency coding a MPEG (Moving Picture Experts Group) 2 is a typical system. In a JTC (Joint Technical Committee) of an ISO (International Organization for Standardization) and an IEC (International Electro Technical Commission), the MPEG2 is a coding standard advancing its standardization as ISO/IEC 13818. In the MPEG2, a MPEG2 system which standardizes the system for multiplexing the data stream of the image data or audio data is defined for using the data streams of the encoded image data or audio data for various applications not limited to the coding standard. The MPEG2 system has two data stream standards depending on applications using the data stream, i.e., a transport stream on the assumption of adaptation to the broadcasting or communication (hereinafter referred to as TS (Transport Stream)) and a program stream on the assumption of the adaptation to the storage or recording (hereinafter referred to as PS (Program Stream)).

The transport stream is taken into account that a plurality of programs are transmitted by one stream it can use a plurality of reference times each programs. It is expected to be adapted for broadcasting or communicating applications. On the other hand, the program stream is expected to be adapted widely as a standard recording format of a storage medium such as a magnetic disc, optical disc or magnetic tape. Here, these are standards for input signals of the decoder, and MPEG2 does not standardize the encode method of the signal.

Now, it is provided that the program transmitted by the digital broadcasting or digital communication is recorded, and in this case, a plurality of programs are transmitted by using the MPEG2 system transport streams. In this case, a plurality of programs are transmitted by using the MPEG2 system transport streams. In this case, to record the predetermined program the program portion which is desired to be recorded is extracted from the transport streams, and the extracted portion is converted into the program stream and recorded to the recording medium.

Thus, by using the transport stream in the broadcasting or communication it is possible to transmit a plurality of programs by one stream. In the case that the receiver has a plurality of tuner functions and also has a function for receiving the streams or programs transmitted from a plurality of transponders, it can receive the programs transmitted in the same time period by the transport stream.

However, since the transport stream is converted into the program stream at the recording time it had a problem that it needed the recording media as many as the programs to be recorded in order to record the transmitted programs at the same time.

Here, it may be possible to record the transmitted transport stream as it is, not converting into the program streams. However, in this case, undesired programs are also recorded together with the desired programs. Further, since the program stream is recognized as a standard format to the recording medium it is not a common.

Further, even when the transport stream is recorded as it is, if there are a plurality of programs to be recorded within the transport streams a plurality of recording media are necessary for recording these transport streams.

As described above, conventionally, in case of recording a plurality of programs transmitted by using the transport stream it has a problem that it needed the recording medium as many as the programs to be recorded.

The present invention has been made in view of the problems shown above and it is the object of the present invention to provide a digital signal receiver capable of recording a plurality of programs transmitted by using the transport stream to one recording medium.

In order to achieve the above object, the digital signal receiver according to a first aspect of the present invention includes a plurality of demodulation units for selecting and demodulating a specific frequency band from transmitted digital signals so as to obtain a transport stream which is constructed by multiplexing a plurality of programs, a format conversion unit for converting a plurality of transport streams from the demodulation units into program streams each having a single program, a data bus unit having a data bus for transmitting data, a plurality of first bus interface units for converting the program streams from the format conversion unit into data formats corresponding to the data bus and outputting them to the data bus at different timings each, and a second bus interface unit for converting the data which are sent by a multiplex transmission via the data bus into the original data formats and supplying them to a specific recording unit.

In order to achieve the above object, the digital signal receiver according to a second aspect of the present invention includes a plurality of demodulation units for selecting and demodulating a specific frequency band from transmitted digital signals so as to obtain a transport stream which is constructed by multiplexing a plurality of programs, a format conversion unit for converting a plurality of transport streams from the demodulation units into program streams each having a single program, a data bus unit having a data bus for transmitting data, a plurality of first bus interface units for converting the program streams from the format conversion unit into data formats corresponding to the data bus and outputting them to the data bus at different timings each, a plurality of first bus interface units for converting the program streams from the format conversion unit into data formats corresponding to the data bus and outputting them to the data bus at different timings each, and a fourth bus interface unit for converting the data transmitted to the data bus from a plurality of the first bus interface unit or the data transmitted to the data bus from the third interface unit into the data which have the same formats as the data formats of the program streams so as to supply a specific decoding unit.

In order to achieve the above object, the digital signal receiver according to a third aspect of the present invention includes a plurality of demodulation units for selecting and demodulating a specific frequency band from transmitted digital signals so as to obtain a transport stream which is constructed by multiplexing a plurality of programs, a data bus unit having a data bus for transmitting data, a plurality of first bus interface units for converting a plurality of the transport streams from the demodulation units into the data formats corresponding to the data bus and outputting them to the data bus at different timings, a third bus interface unit for transmitting and receiving the data between the data bus, and converting the data formats between the data which are sent by a multiplex transmission via the data bus and the data which have the same formats as the data formats of the transport streams, a format conversion unit for transmitting and receiving the data between the third bus interface unit, transmitting and receiving the data between the specific recording/reproducing unit, and converting the format between the data containing transport streams and the data containing at least one program stream which is consisted of a signal program, and a fourth bus interface unit for converting the data transmitted to the data bus from a plurality of the first bus interface unit or the data transmitted to the data bus from the third interface into the data which have the same formats as the data formats of the transport streams so as to supply a specific decoding unit.

In order to achieve the above object, the digital signal receiver according to a fourth aspect of the present invention includes a plurality of demodulation units for selecting and demodulating a specific frequency band from transmitted digital signals so as to obtain a transport stream which is constructed by multiplexing a plurality of programs, an encoding unit for producing new transport streams by a time division multiplex of a plurality of the transport streams obtained from the demodulation units, a data bus unit having a data bus for transmitting the data, a first bus interface unit for converting the transport streams from the encoding unit into data formats corresponding to the data bus, a third bus interface unit for transmitting and receiving the data between the data bus, and converting the data formats between the data which are sent by a multiplex transmission via the data bus and the data which have the same formats as the data formats of the transport streams, a format conversion unit for transmitting and receiving the data between the third bus interface unit, and also between the specific recording/reproducing unit, and converting the format between the data having a plurality of the transport streams and the data having at least one program stream which is consisted of a single program, and a fourth bus interface unit for converting the data transmitted to the data bus from the first bus interface unit or the data transmitted to the data bus from the third interface into the data which have the same formats as the data formats of the transport streams so as to supply a specific decoding unit.

In order to achieve the above object, the digital signal receiver according to a fifth aspect of the present invention includes a data bus unit having a data bus for transmitting the data, at least one receiving unit having a conversion unit for converting transport streams constructed by multiplexing a plurality of programs which are obtained by selecting and demodulating the specific frequency bands from the transmitted digital signals into the program streams each having a simple program, and the first bus interface unit for converting the output of the conversion unit into the data formats which are data transmittable via the data bus, at least one recording/reproducing unit having the third bus interface unit for transmitting and receiving the data between the data bus and also between the specific recording/reproducing unit, and converting the data formats between the data which are sent by a multiplex transmission via the data bus and the data having the same data formats as the program streams, and at least one decoding unit having the fourth bus interface unit for converting the data transmitted to the data bus from the at least one receiving unit or the data transmitted to the data bus from the at least one recording/reproducing unit into the data having the same formats as the program streams so as to supply them to the specific decoding unit.

In order to achieve the above object, the digital signal receiver according to a sixth aspect of the present invention includes a data bus unit having a data bus for transmitting the data, at least one receiving unit having a unit for obtaining the transport streams constructed by multiplexing some programs by selecting and demodulating the specific frequency bands from the transmitted digital signals, and the first bus interface unit for converting the outputs of the unit mentioned above into the data formats which are data transmittable via the data bus, at least one recording/reproducing unit having the third bus interface unit for transmitting and receiving the data between the data bus, and converting the data formats between the data multiplexed trammeled via the data bus and the data having the same data formats as the transport streams, and unit for transmitting and receiving the data between the third bus interface unit, converting the format between the data containing the transport streams and the data containing at least one program stream which is constructed by simple programs, and transmitting and receiving the data between the specific recording/reproducing unit, and at least one decoding unit having the fourth bus interface unit for converting the data transmitted to the data bus from the at least one receiving unit or the data transmitted to the data buses from at least one recording/reproducing unit into the data having the same formats as the transport streams so as to supply them to the specific decoding unit.

In order to achieve the above object, the digital signal receiver according to a seventh aspect of the present invention includes a data bus unit having a data bus for transmitting the data, at least one receiving unit having producing unit for producing new transport streams by the time-division multiplex of the transport streams constructed by multiplexing some programs which are obtained by selecting and demodulating the specific frequency band from the transmitted digital signals, and the first bus interface unit for converting the outputs of the producing unit into the data formats which are data transmittable via the data bus, at least one recording/reproducing unit having the third bus interface unit for transmitting and receiving the data between the data bus, and converting the data formats between the data multiplexed trammeled via the data bus and the data having the same data formats as the transport streams, and a unit for transmitting and receiving the data between the third bus interface unit, converting the format between the data containing the transport streams and the data containing at least one program stream which is consisted of a single program, and transmitting and receiving the data between the specific recording/reproducing unit, and at least one decoding unit having the fourth bus interface unit for converting the data transmitted to the data bus from at least one receiving unit or the data transmitted to the data bus from at least one recording/reproducing unit into the data having the same formats as the transport streams so as to supply them to the specific decoding unit.

According to the first aspect of the digital signal receiver, it is possible to obtain the plurality of transport streams from the transmitted digital signals by the plurality of demodulation unit. These transport streams are converted into the plurality of program streams by the format conversion unit. A plurality of the first bus interface unit convert the program streams into the data formats corresponding to the data bus and output them to the data bus by different timings. Accordingly, the program steams having the plurality of programs at the same time period present on the data bus. The second bus interface unit restores the data sent by the multiplex transmission through the bus into the original data formats and supplies them to the specific recording unit. Accordingly, the program stream having the plurality of programs is recorded at the same time period by the recording unit.

According to the second aspect of the digital signal receiver, data sent by the multiplex transmission via the data bus converted into the original data formats by the third bus interface unit and supplied to the recording unit. Further, the reproduced data from the recording/reproducing unit is converted into the data formats corresponding to the data bus by the third bus interface unit so as to output to the data bus. The fourth bus interface unit converts the data transmitted to the data bus from the plurality of the first bus interface unit or the data transmitted to the data bus from the third bus interface unit into the data having the same data formats as the data formats of the program streams so as to supply them to the specific decoding unit. Accordingly, in the decoding unit, the data associated to the transmitting data or the reproduced data from the recording/reproducing unit is decoded.

According to the third aspect of the digital signal receiver, the plurality of the first bus interface unit convert the transport streams into the data formats corresponding to the data bus so as to output the data bus at different timings each. Accordingly, the data having the plurality of transport streams present on the data bus. The third bus interface unit converts the data on the data bus into the original data formats and outputs them to the format conversion unit. By the format conversion unit the data containing at least one program stream are obtained and supplied to the recording/reproducing unit. Further, reproduced data from the recording/reproducing unit are converted into the data having the same data format as that of the transport streams, then converted into the data formats corresponding to the data bus by the third bus interface unit so as to output to the data bus. The forth bus interface unit converts the data transmitted to the data bus from the plurality of the first bus interface unit or the data transmitted to the data bus from the third bus interface unit into the data having the same data formats as that of the transport streams so as to supply them to the specific decoding unit. Accordingly, in the decoding unit, the transmitted data or the reproduced data from the recording/reproducing unit is decoded.

According to the fourth aspect of the digital signal receiver, by the encoding unit, new transport streams to which the plurality of transport streams are multiplexed are produced. The transport streams from the encoding unit are converted into the data formats corresponding to the data bus so as to output to the data bus by the first bus interface unit. Accordingly, the data having the plurality of transport streams present on the data bus. The third bus interface unit converts the data on the data bus into the original data formats and supplies them to the format conversion unit. By the format conversion unit the data containing at least one program stream are obtained and supplied to the recording/reproducing unit. Further, the reproduced data from the recording/reproducing unit are converted into the data having the same data formats as that of the transport streams by the format conversion unit and converted into the data formats corresponding to the data bus by the third bus interface unit, so as to be output to the data bus. The fourth bus interface unit converts the data transmitted to the data bus from the first bus interface or the data transmitted to the data bus from the third bus interface unit into the data having the same data formats as that of the transport streams and supplies them to the specific decoding unit. Accordingly, in the decoding unit, the transmitted data or the reproduced data from the recording/reproducing unit is decoded.

According to the fifth aspect of the digital signal receiver, the receiving unit, recording/reproducing unit and decoding unit have each first, third and fourth bus interface unit. The receiving unit, recording/reproducing unit and decoding unit can transmit the data using the data bus by the first, third and fourth bus interface unit. The transport streams are obtained from the digital signals transmitted from the receiving unit, which are converted into the program streams, then converted into the data formats corresponding to the data bus so as to output to the data bus. By defining the plurality of the receiving units, the data containing the plurality of the program streams flow on the data bus. The recording/reproducing unit records the data sent by the multiplex transmission on the data bus after converting them into the original data formats.

According to the sixth aspect of the digital signal receiver, the receiving unit converts the transport streams into the data formats corresponding to the data bus. By using the plurality of the receiving unit, the data containing the plurality of the transport streams flow on the data bus. The recording/reproducing unit records the data sent by the multiplex transmission on the data bus after converting them into the original data formats.

According to the seventh aspect of the digital signal receiver, the receiving unit produce new transport streams by multiplexing the plurality of transport streams and converts them into the data formats corresponding to the data bus. Accordingly, the data containing the plurality of transport streams bus flow on the data bus. The recording/reproducing unit records the data sent by the multiplex transmission on the data bus after converting them into the original data formats.

Additional objects and advantages of the present invention will be apparent to persons skilled in the art from a study of the following description and the accompanying drawings, which are hereby incorporated in and constitute a part of this specification.

For a better understandings of the present invention and many of the attendant advantages thereof, reference will now be made by way of example to the accompanying drawings, wherein:
FIGURE 1 is a block diagram showing one embodiment of the digital signal receiver according to the present invention;
FIGURE 2 is a diagram for explaining the format converters F11 through F1n in FIGURE 1;
FIGURE 3 is a diagram for explaining the data bus interfaces IF11 through IF1n in FIGURE 1;
FIGURE 4 is a diagram for explaining the operation of the embodiment;
FIGURE 5 is a diagram for explaining the recording example of the storage medium;
FIGURE 6 is a block diagram showing the modification of the FIGURE 1;
FIGURE 7 is a block diagram showing other embodiment of the present invention;
FIGURE 8 is a block diagram showing the modification of the FIGURE 7;
FIGURE 9 is a block diagram showing other embodiment of the present invention; and
FIGURE 10 is a block diagram showing the transformed embodiment from that shown in FIGURE 9.

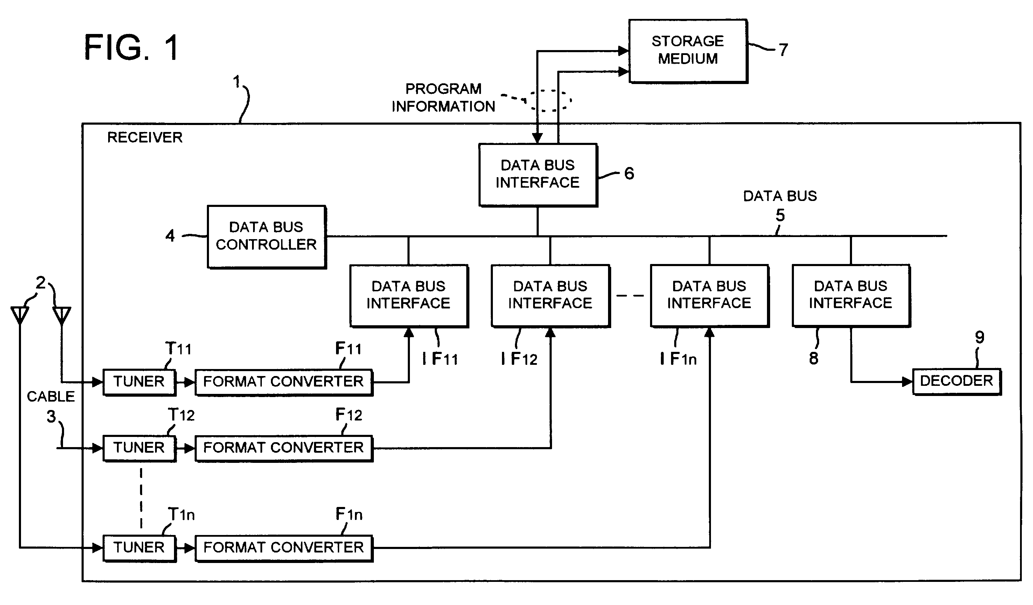

Embodiments of the present invention will be explained hereinafter in reference to the drawings. FIGURE 1 is a block diagram showing one embodiment of the digital signal receiver according to the present invention.

The receiver 1 has n tuners T11 through T1n (n is a natural number). High frequency (RF) signals led to antennas 2, 2 and RF signals from a cable 3 are input to the tuners T11 through T1n. In FIGURE 1, a ground wave input from the antenna 2 or a cable input from the cable 3 is input to each tuner. However, the kinds of input supply are not limited to such inputs. Further, the number of the tuner are also not limited neither.

The tuners T11 through T1n obtain the specific digital signal by selecting and demodulating the specific frequency bands. The output digital signals from the tuners T11 through T1n construct the transport streams. The outputs of the tuners T11 through T1n are supplied to format converters F11 through F1n. The format converters F11 through F1n select the specific programs associated to the user operation among the input transport streams and convert them into the program streams so as to output them.

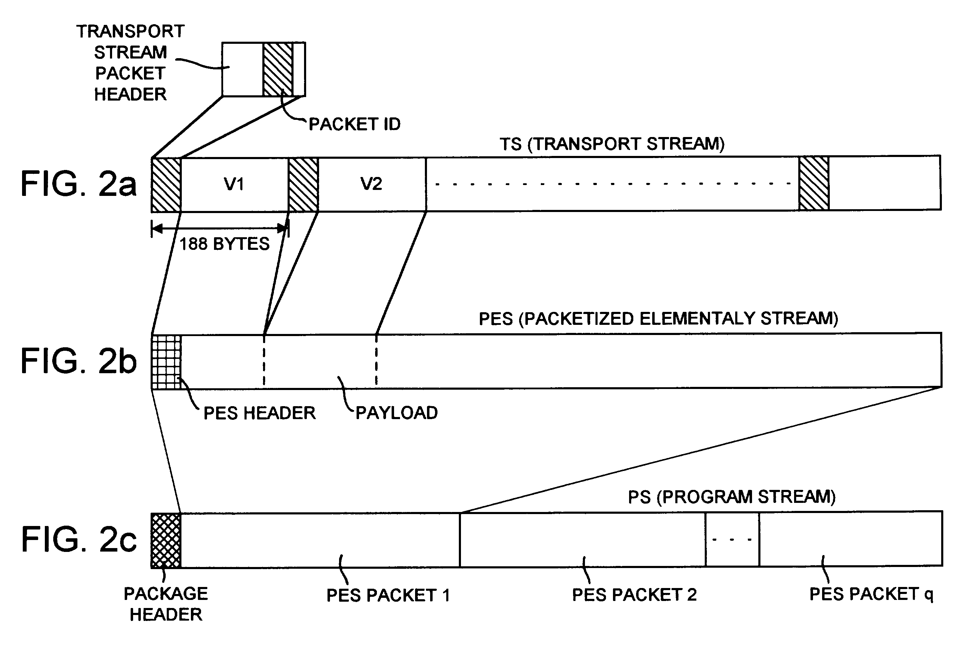

FIGURE 2 is a explaining diagram for explaining the format conversion by the format converters F11 through F1n in FIGURE 1. FIGURE 2a shows the transport stream, FIGURE 2b shows the PES, and FIGURE 2c shows the program stream.

In the embodiments of the present invention, the transport stream means the transport streams defined in the ISO/IEC13818, and the program stream means the program stream defined in the ISO/IEC13818 for instance.

As shown in FIGURE 2a, the transport stream is consisted of 188 bytes containing four bytes header (shown in slanting lines) of fixed-length packets. The transport stream includes a multiplexed unit of a plurality of programs, each program has different packets according to it being video data, audio data or other digital data. Each header of each packet contains a packet ID for showing the type of the packet, where a different numerical value is assigned according to the types.

For conversion between the transport stream and the program streams a stream called PES (Packetized Elementary Stream) packet defined in ISO/IEC 13818 is used.

The PES packet is constructed by extracting the each type of packet of the same program from the TS packet. And PES header is added to the end of a payload (information).

As shown in FIGURE 2c, the program stream includes a package of groups of a plurality of PES packets. And a package header is added to the end of it. The format converters F11 through F1n generates the package data by synthesizing PES from the input transport streams and obtains the program streams by adding the header to the generated package data. As mentioned above, the format converters F11 through F1n converts the transport streams into the program streams by using the PES as an intermediate format. In the process of the conversion from the transport stream to the PES, desired programs are selected. The program streams from the format converters F11 through F1n are supplied to data bus interfaces If11 through IF1n.

The data bus interfaces If11 through IF1n become the interface for transmitting and receiving the data between the data bus 5, That is, the data bus interfaces IF11 through IF1n, which have the memory capacity of each bus standard and register (not shown) performs buffering and control the transmitting and receiving the data between other data bus interfaces and data bus 5 and also control the velocity of them.

The data bus 5 transmits the data between each modules such as the stream decoders inside the receiver 1, or between apparatuses outside the receiver 1. The bus interfaces IF11 through IF1n convert the data streams into the data formats defined to the data bus and output them.

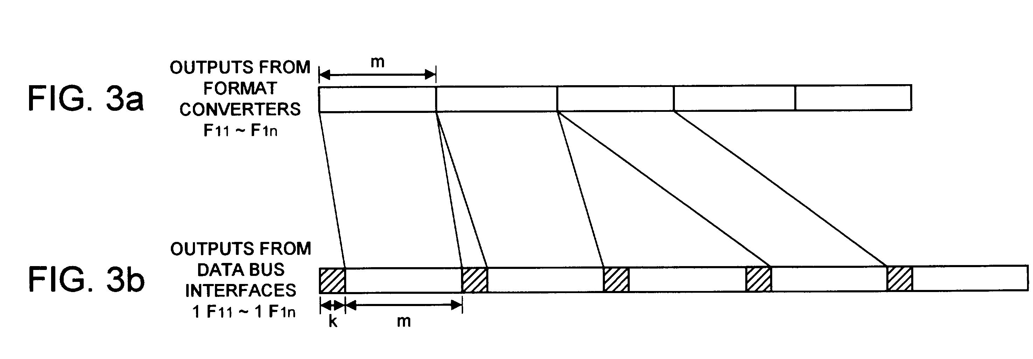

FIGURE 3 is a explanation diagram showing the example of the data formats on the data bus 5.

The-data bus interfaces IF11 through IF1n, as shown in FIGURE 3, divide the input program stream (FIGURE 3a) into data length m bytes defined to the bus, and add the k bytes header to the end of the divided m bytes. The header contains the address information of the bus interfaces in the data transmitting origin, data length of the data following the header, the data reproducing order information and the error correct information.

Here, the data formats of the bus are not limited to the example shown in FIGURE 3. It may be any formats if it assures the transmitting and receiving of the data. For, instance, it may be the format which recognizes the data origin and the data termination of the data in the header part, as shown in FIGURE 3, and it may be the format corresponding to the bus standard which recognizes the data before the transmission of the data between the interfaces.

A data bus controller 4 controls the data transfer on the data bus 5. The data controlled by the data bus controller 4 and transmitted to the data bus 5 by the proper data transfer rate from the data bus interfaces If11 through IF1n are transmitted to the bus interface of the destination terminal.

In the embodiment, the data bus controller 4 transmits the outputs of the data bus interfaces If11 through IF1n via the data bus 5 by the time-division multiplex.

The data transmitted via the data bus 5 is supplied to the data bus interface 6 in the data termination. The bus interface 6, which has a memory capacity defined by the data bus 5 to make it impossible to arbitrate the bus mastership between other data bus interfaces or a register, performs buffering. The data bus interface 6 restores the original program stream from the input data and outputs them to a storage medium 7, and also outputs the header information to the storage medium 7 as a program information. Further, the data bus interface 6 converts the data from the storage medium 7 into the data format as corresponding to the data bus 5 and outputs them on the data bus 5.

The storage medium 7 detects that which program data the transmitted data are, where they are obtained from the tuners T11 through T1n, or where they are output from the data bus interfaces IF11 through IF1n based on the program information, and records each program stream as changing the recording position according to each program. For instance, if the storage medium 7 is an optical disc recorder or a hard disc apparatus it changes the recording positions of the program streams according to each disc sector.

On the other hand, the data on the data bus 5 is also supplied to the data bus interface 8. The data bus interface 8, which has a memory capacity defined by the data bus 5 to make it impossible to arbitrate the bus mastership between other data bus interfaces or a register, performs buffering. The data bus interface 8 selects the program streams which are associated to the user operation from the header information of the input data and input them to the decoder 9. The decoder 9 restores the video data, audio data or other data of the program by decoding the program stream and supplies them to the display (not shown) so as to display the desired program.

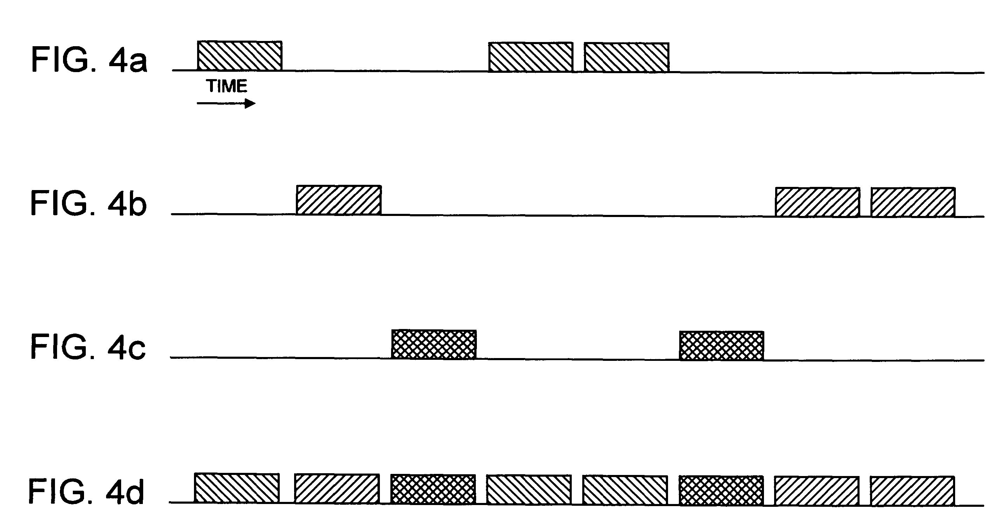

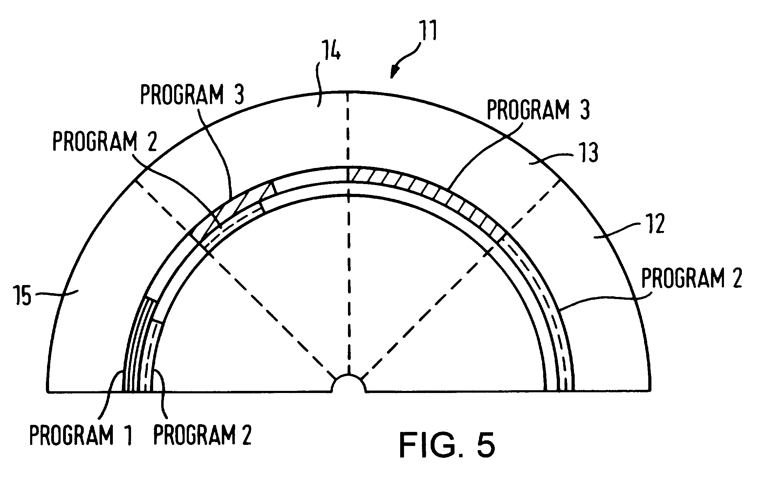

Next, the operation of the embodiment constructed like this will be explained hereinafter referring to FIGURES 4 and 5. FIGURE 4 is a flow chart for explaining the data transfer on the data bus 5. FIGURE 5 is a flow chart for explaining the recording example of the storage medium.

The RF signals from the antenna 2 and the cable 3 are supplied to the tuners T11 through T1n, and where these are demodulated by being selected the specific frequency band. The output digital signals of the tuners T11 through T1n are the transport streams. The outputs from the tuners T11 through T1n are supplied to the format converters F11 through F1n.

The format converters F11 through F1n selects the specific programs which are associated to the user operation from the input transport streams and convert them into the program streams. The program streams from the format converters F11 through F1n are supplied to each data bus interfaces IF11 through IF1n.

The data bus interfaces IF11 through IF1n divide the input program stream shown in FIGURE 3a into m bytes units and adds k bytes header to the end of the m bytes unit as shown in FIGURE 3b so as to output them. FIGURES 4a through 4c shows the outputs from the data bus interfaces IF11 through IF1n. The left inclined slanting line zones show one unit (m+k bytes) of the data which is based on the program streams corresponding the programs selected by the format converter F11 from the outputs of the tuner T11. Similarly, the right inclined slanting line zones show one unit (m+k bytes) of the data which is based on the program streams corresponding the programs selected by the format converter F12 from the outputs of the tuner T12. Further, the cross-hatch parts show one unit (m+k bytes) of the data which is based on the program streams corresponding the programs selected by the format converter F13 from the outputs of the tuner T13.

As shown in FIGURES 4a through 4c, the outputs of the data bus interfaces Fll through F13 are controlled by the data bus controller 4 so as to be output on the data bus 5 by different timings. Therefor, the multiplexed data are transmitted on the data bus 5 as shown in FIGURE 4d. That is, in the example of FIGURE 4, the data based in the three programs at the same time are transmitted via the data bus 5.

Now, it is provided that these three programs are recorded in the storage medium 7.
In this case, the data on the data bus 5 are supplied to the data bus interface 6. The data bus interface 6 separates the header from the each one unit data shown in FIGURE 4d, outputs the program streams to the storage medium 7 and also outputs the header to the storage medium 7 as a program information. The storage medium 7 records the program streams of three programs supplied from the data bus interface 6.

Now, the disc apparatus is adapted as the storage medium 7. The FIGURE 5 is explaining the recording on the disc in this case. The programs 1, 2 and 3 of FIGURE 5 correspond to each outputs from the format converters F11 through F1n. The storage medium 7 performs the recording and reproducing to the disc 11. The storage medium 7 divides the data into areas divided in the track or sector units and records them. That is, it divides the disc 11 into 8 sectors, that is, 8 areas in round direction so as to record.

Here, the recording data write-in rate writes in the data by program units, as same as the data bus 5 transmission rate. For instance, in the specific two tracks as shown in FIGURE 5 among the 8 areas the area 12 records the program 2, the area 15 records the program 3, the area 14 records the programs 2 and 3, and the area 15 records the programs 1 and 2. As mentioned above, since the data transmitted from the data bus 5 via the data bus interface 6 is constructed by a plurality of programs are time-multiplexed it changes the disc write-in areas according to the change of programs so as to record a plurality of programs at the same time period.

Further, it can select only specific programs from the received plurality of transport streams and display them. For instance, it is provided that the specific program in the transport stream received the tuner T11 is displayed. The format converter F11 selects the TS packet of the program to be displayed from the input transport streams to generate PES. Further, the format converter F11 packages the PES and adds the package header to make the program stream.

This program stream is supplied to the data bus interface IF and output in the format corresponding to the data bus 5 by adding the header which is designated to the data bus interface 8. The data bus interface 8 takes-in the data specified as a data termination from the data transmitted from the data bus 5 and restores the data into the original program streams by eliminating the header so as to output them to the decoder 9.

The decoder 9 decodes the programs streams so as to obtain the video data, audio data and other data. These data are supplied to the display (not shown) and displayed.

Further, in the embodiment, it can be possible to reproduce and display the programs recorded in the storage medium 7. That is, in this case, the storage medium 7 reproduces the desired programs which are associated to the user operation. The program streams of this program is divided into m bytes units in the data bus interface 6 and output in the format corresponding to the data bus 5 by adding the k bytes header by m bytes units. In this case, that the data termination is the data bus interface 8 is specified by the header.

Accordingly, to the data bus interface 8 the program stream reproduced by the storage medium 7 is supplied. Other operations are as same as the display time of the receiving data.

As mentioned above in the embodiment, according to transmit the program streams of a plurality of programs obtained from the transport streams via the data bus by time-division multiplexed it is possible to record a plurality of program streams at the same time period by a storage medium.

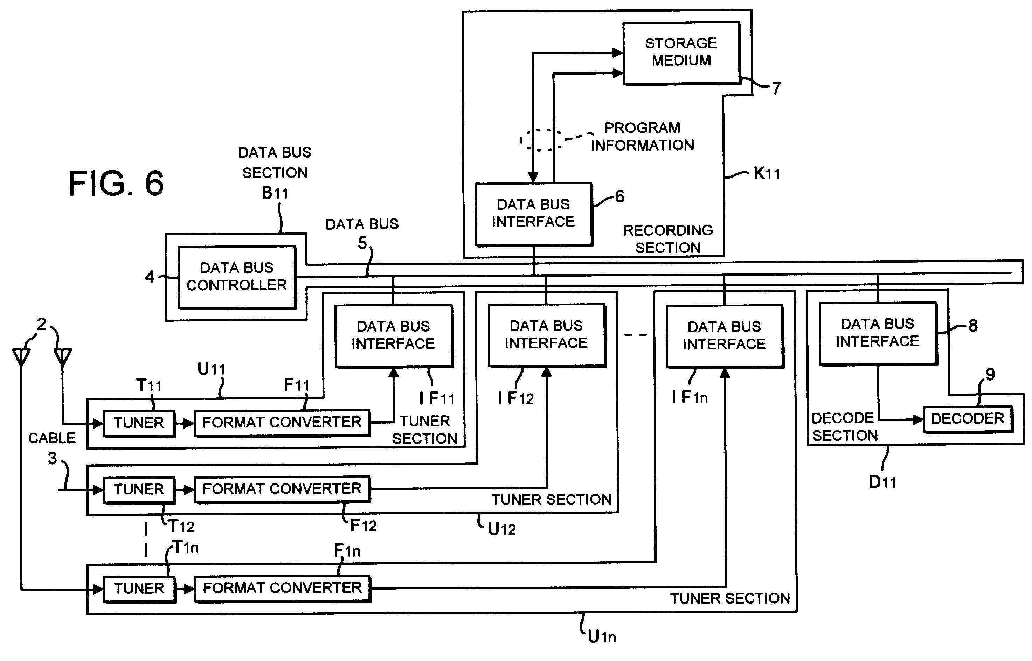

By the way, in the embodiment shown in FIGURE 1 receiver is containing a plurality of tuners and decoders. However, one receiver needs not to have all these circuits. FIGURE 6 shows the circuit example which has the same construction as FIGURE 1 by combining units, each of which has a part of circuit. In FIGURE 6 the same components as those shown in FIGURE 1 are assigned with the same marks and their explaining are omitted.

A tuner section Ull includes a tuner T11, a format converter F11 and a data bus interface IF11. As same as this, a tuner section U12 includes a tuner T12, a format converter F12 and a data bus interface IF12. The tuner section U1n includes a tuner T1n, a format converter F1n and a data bus interface IF1n.

A data bus section B11 includes a data bus controller 4 and a data bus 5. A recording section K11 includes a data bus interface 6 and a storage medium 7. And, a decoder section D11 includes a data bus interface 8 and a decoder 9.

As mentioned above, in FIGURE 6 the data bus section B11 is independent. The n tuner sections Ull through Uln, the recording section K11 and the decode section D11 have each the bus interfaces IF11 through IF1n, 6 and 8, and they are connected to the data bus 5 of the data bus section B11 via each data bus interface. Therefore, the circuit construction of FIGURE 6 becomes as same as the FIGURE 1.

According to such a construction mentioned above, it becomes very easy to improve or extend each unit. For instance, since the improvement or changing number of the tuner section, or extension of the decoder sections are also easy it is possible to make the desirable surroundings by connecting the units desired by users.

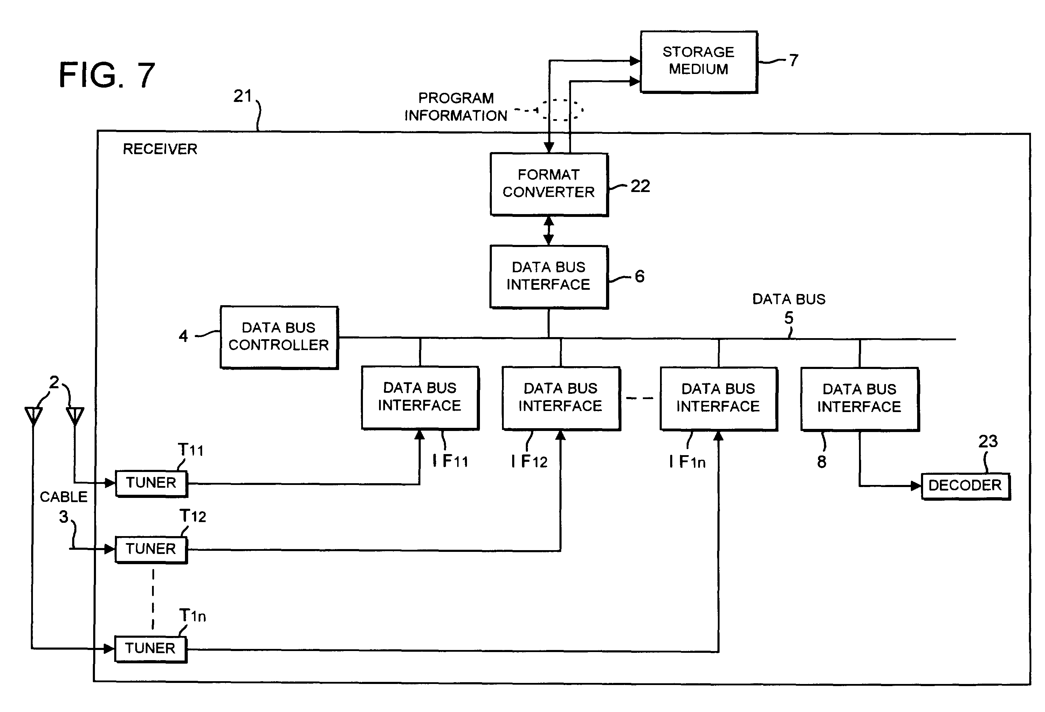

FIGURE 7 is a block diagram showing the other embodiment of the present invention. In FIGURE 7 the same components as those shown in FIGURE 1 are assigned with the same marks and the explanation of them are omitted. In the embodiment of FIGURE 1 the transport streams from the tuners T11 through T1n are converted into the program streams, them they are supplied over the data bus. However, in the embodiment of FIGURE 7 it is different from that of FIGURE 1 that the transport streams are supplied on the data bus and it adapts the receiver 21 which has one format converter.

The output transport stream from the tuners T11 through T1n are supplied to each data bus interfaces IF11 through IF1n. Also in this embodiment, the transport stream means the one defined in ISO/IEC 13818, and the program stream means the one defined in ISO/IEC 13818.

The data bus interfaces IF11 through IF1n, which have the same construction as the embodiment shown in FIGURE 1, divide the input data into m bytes and add k bytes header to the end of the divided each m bytes so as to output them in the data formats corresponding to the data bus 5. In this embodiment, the inputs of the data bus interfaces IF11 through IF1n are transport streams. That is, n transport streams in maximum are time-division multiplexed in the data formats corresponding to the data bus 5 and flowed on the data bus 5.

The data bus interface 6 takes-in the data transmitted on the data bus 5 and restores them into the original data formats so as to output them to the format converter 22.. The format converter 22 performs the format conversion to the transport stream part in the input data and makes program streams of the desired programs so as to output them to the storage medium 7. Further, the format converter 22 outputs the header information to the storage medium 7 as the program information.

As shown in FIGURE 2, the packet ID showing the packet types is assigned to the header part of the transport stream. To this packet IDs different values according to each packet type are assigned, and different values are assigned to different transport streams. So, by discriminating the packet ID it is possible to make the program streams of a plurality of programs which are desired to be recorded from a plurality of transport streams and output them to the storage medium 7 in the state which are time-division multiplexed.

On the other hand, the data bus interface 8 restores the transport streams on the data bus 5 into the original data formats and output them to the decoder 23. The decoder 23 decodes the transport streams and outputs the video data, audio data and other data of the desired programs to the displayed (not shown ).

Next, the operation of the embodiment in such structure as described above is explained.

The RF signals from the antenna 2 and the cable 3 are applied to the tuners T11 through T1n, and the transport streams in the specific frequency band are selected. These transport streams are converted into the data formats corresponding to the data bus 5 in the data bus interfaces IF11 through IF1n and controlled by the data bus controller 4 so as to be transmitted to the data bus 5 in the time-division multiplexed state.

Now, it is provided that a plurality of desired programs in the received transport streams are recorded. In this case, the data bus interfaces IF11 through IF1n for outputting the transport streams containing the programs to be recorded specifies the data bus interface 6 as a data termination. The data bus interface 6 takes-in the specified transport streams and restores them into the original data formats, then outputs them to the format converter 22.

The format converter 22 detects the packet ID contained in the input data and makes the program streams of a plurality of programs which are desired to be recorded so as to output them to the storage medium 7. Further, the format converter 22 outputs the header information to the storage medium 7 as the program information. Therefore, in the storage medium 7 a plurality of program streams are recorded at the same time period.

Further, in the embodiment, the displays associated to the receiving data and the reproduced data from the storage medium 7 are possible. In the case of display associated to the receiving data, the data bus interface 8 extracts the transport streams specified from the data on the data bus 5 and outputs them to the decoder 23. The decoder 23 decodes the input transport streams and supplies them to the displayed.

On the other hand, in the case of display associated to the reproduce data from the storage medium 7, the storage medium 7 reproduces the program streams of the programs which are displayed. The format converter 22 performs the format conversion to the program streams from the storage medium 7 and makes the transport streams. The transport streams are converted into the formats corresponding to the data bus 5 in the data bus interface 6 and transmitted on the data bus 5. In this case, the data bus interface 6 adds the header information which specifies the data bus interface 8 as the data termination of the transport streams.

The data bus interface 8 takes- in the transport streams of the programs which are to be displayed from the data bus 5 and converts the data formats of them so as to output the to the decoder 23. Other operations are same as the display time of the receiving data.

As mentioned above, in the embodiment, it has the same effect as the embodiment shown in FIGURE 1, and it also has the effect that it can obtain the multiplexed data of the program streams of a plurality of programs contained in a plurality of transport streams by a system of format converter.

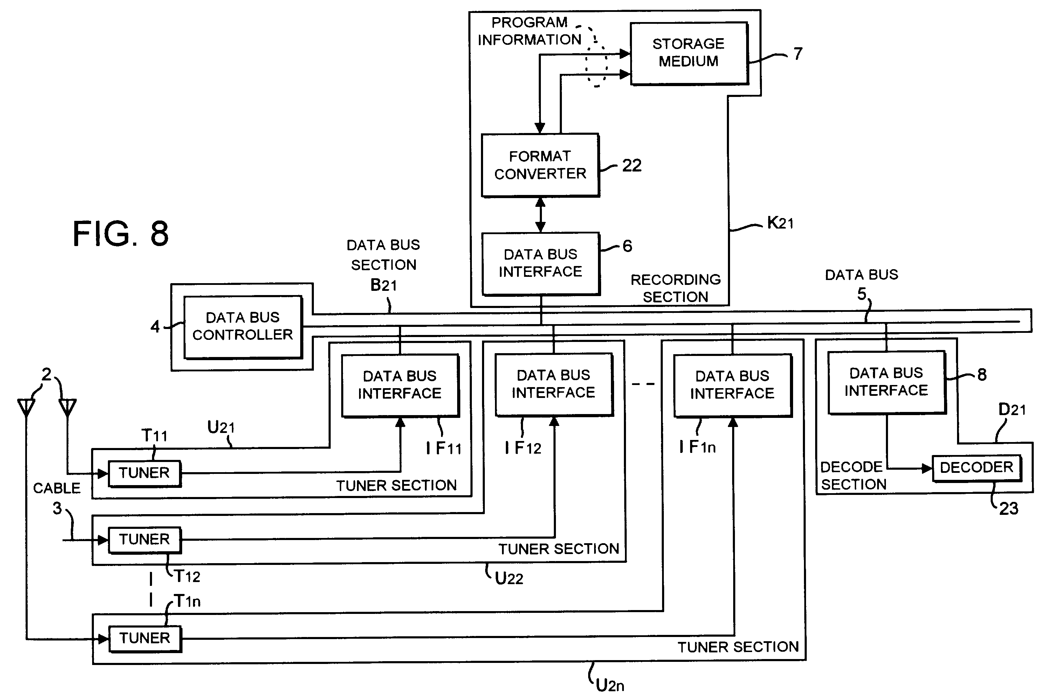

Further in the embodiment, as same as the embodiment shown in FIGURE 1, 1 receiver needs not to have all circuits. FIGURE 8 shows the circuit having the same construction as that shown in FIGURE 7 by combining the units, each of which have a part of circuit. In FIGURE 8 the same components as those shown in FIGURE 7 are assigned with the same marks.

The tuner section U21 includes a tuner T11 and a data bus interface IF11. As same as this, the tuner section U22 includes a tuner T12 and a data bus interface IF12, while the tuner section U2n includes a tuner T1n and a data bus interface IF1n.

The data bus section B21 includes a data bus controller 4 and a data bus 5, while the recording section K21 includes a data bus interface 6, a format converter 22 and a storage medium 7. Further, the decoding section D21 includes a data bus interface 8 and a decoder 23.

Accordingly, in FIGURE 8 the data bus section B21 is independent. The n tuner sections U21 through U2n, the recording section K21 and the decoder section D21 have each data bus interfaces IF11 through IF1n, 6, and 8, and each if these sections are connected to the data bus 5 of the data bus section B21 via each bus interface. Accordingly, the circuit construction shown in FIGURE 8 becomes as same as that shown in FIGURE 7.

According to such a construction mentioned above, it will be easy to improve and extend each unit. For instance, since the improvement or changing of the number of the tuner sections or extension of the decoder section are easy it can obtain the desired surroundings by connecting the units which are desired by user.

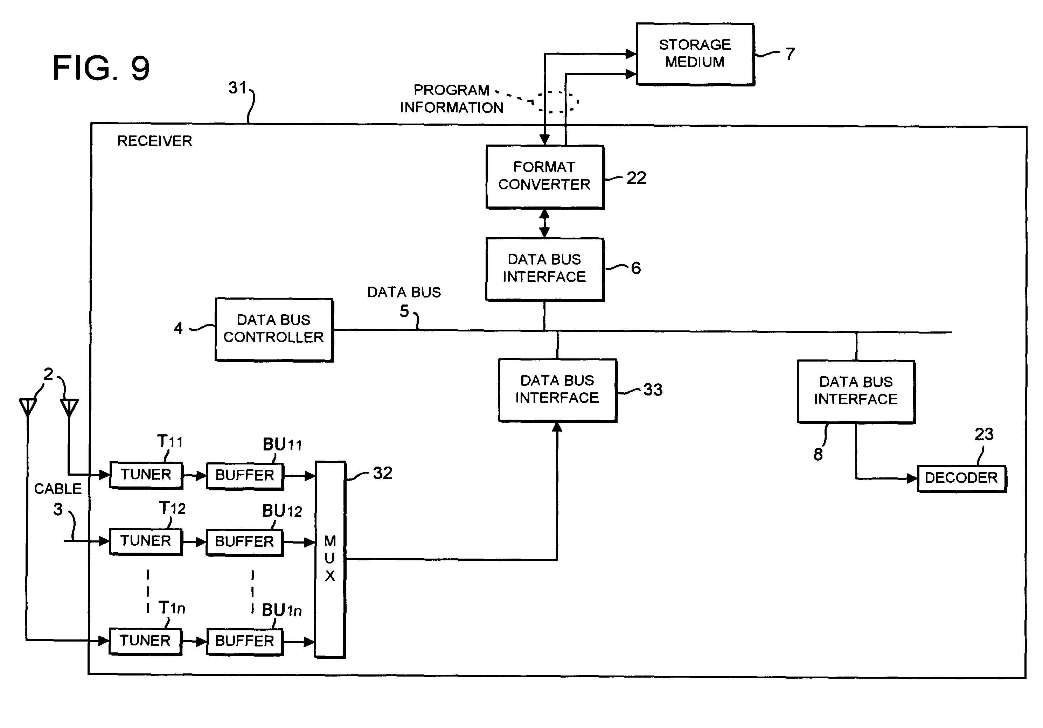

FIGURE 9 is a block diagram showing other embodiment of the present invention. In FIGURE 9 the same component as those shown in FIGURE 7 are assigned with the same marks, and the explanation of them are omitted. In embodiment shown in FIGURE 7 each transport streams are converted into the data formats corresponding to the data bus 5 in each data bus interfaces IF11 through IF1n, them they are multiplexed and transmitted on the data bus 5. However, in the embodiment shown in FIGURE 7, it is adapting the receiver 31 for making one transport stream by time-division multiplexing a plurality of transport streams, then converting the transport streams into the data format corresponding to the data bus 5.

That is, the transport streams from the tuners T11 through T1n are applied to the multiplexer (hereinafter referred to as the MUX) 32 via each buffers BU11 through BU1n. Also in this embodiment, the transport stream means that defined in the ISO/IEC 13818, and the program stream means that defined in the ISO/IEC 13818.

The buffers BU11 through BU1n holds the transport streams for a time and output them to the MUX 32. The MUX 32 time-division multiplexed the input n transport streams in maximum and makes new transport streams. The transport streams from the MUX 32 are supplied to the data bus interface 33.

The data bus interface 33, which has a memory which has a capacity corresponding to the bus standard or register (not shown), performs the buffering and also performs transfer controls and data rate controls for data transferred between other data bus interfaces which communicates data with the data bus 5. The data bus interface 33 divides the input transport streams into data length m bytes defined by the bus, adds the k bytes header to the end of the divided m bytes and converts them into the data forms corresponding to the data bus 5 so as to output them on the data bus 5.

Next, the operation of the embodiment constructed as mentioned above will be explained.

The transport streams from the tuners T11 through T1n are applied to each buffers BU11 through BU1n and held for a time, then applied to the MUX 32. The MUX 32 makes new transport streams by time-division multiplexing a plurality of input transport streams. The transport streams are converted into the data formats corresponding to the data bus 5 in the data bus interface 33, then transmitted on the data bus 5.

When a plurality of programs contained in the received transport streams are recorded the data on the data bus 5 are restored to the original data formats in the data bus interface 6 and supplied to the format converter 22. The format converter 22 discriminates the packet ID contained in the data streams from the data bus interface 6 and makes the program streams of a plurality of desired programs. These programs are supplied to the storage medium 7 in the multiplexed states.

Other operations are as same as the embodiment shown in FIGURE 7.

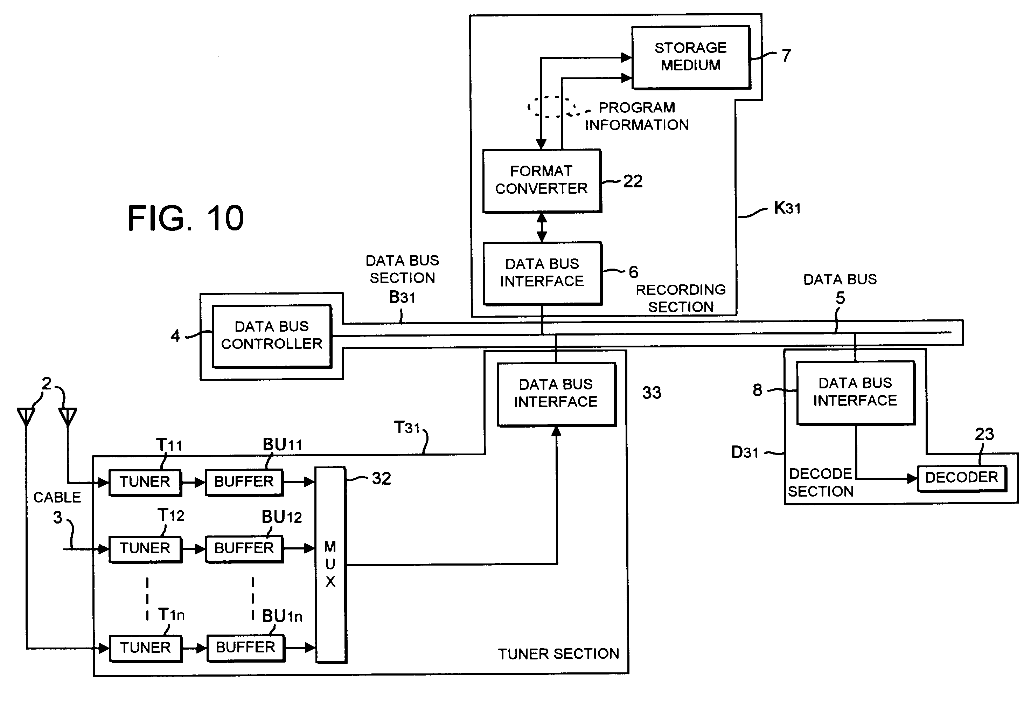

Further, also in the embodiment as same as that shown in FIGURE 7, the receiver needs not to have all circuits. FIGURE 10 shows the circuits having the same structure as that shown in FIGURE 9 by combining the units, each of which has a part of the circuit.

In FIGURE 10 the same components as those shown in FIGURE 9 are assigned with the same marks, and the explanation of them are omitted.

The tuner section U31 includes tuners Tll through Tln, buffers BU11 through BU1n and a data bus interface 33. Further, the data bus section B31 includes the data bus controller 4 and the data bus 5, while the recording section K31 includes the data bus interface 6, the format converter 22 and the storage medium 7. Further, the decoder section D31 includes the data bus interface 8 and the decoder 23.

As mentioned above, in FIGURE 10 the data bus section B31 is separated. The tuner section U31, recording section K31 and the decoder section D31 have data bus interfaces 31, 6 and 8, and each of these sections is connected to the data bus 5 of the data bus section B31 via each data bus interface. Accordingly, the circuit construction shown in FIGURE 10 becomes as same as that shown in FIGURE 9.

According to such a construction as mentioned above, also in the embodiment it can obtain the desired ' surroundings by converting the units which are desired by user.

As described above, the digital signal receiver according to the present invention has the effect that the a plurality of programs transmitted by using the transport streams are recorded to one recording medium at the same time.

While there have been illustrated and described what are at present considered to be preferred embodiments of the present invention, it will be understood by those skilled in the art that various changes and modifications may be made, and equivalents may be substituted for elements thereof without departing from the true scope of the present invention. In addition, many modifications may be made to adapt a particular situation or material to the teaching of the present invention without departing from the central scope thereof. Therefor, it is intended that the present invention not be limited to the particular embodiment disclosed as the best mode contemplated for carrying out the present invention, but that the present invention includes all embodiments falling within the scope of the appended claims.

The foregoing description and the drawings are regarded by the applicant as including a variety of individually inventive concepts, some of which may lie partially or wholly outside the scope of some or all of the following claims. The fact that the applicant has chosen at the time of filing of the present application to restrict the claimed scope of protection in accordance with the following claims is not to be taken as a disclaimer or alternative inventive concepts that are included in the contents of the application and could be defined by claims differing in scope from the following claims, which different claims may be adopted subsequently during prosecution, for example, for the purposes of a divisional application.

## Claims

1. A digital signal receiver comprising;
a plurality of demodulating means each for selecting and demodulating a specific band from received signals to obtain a transport stream formed from a plurality of multiplexed program signals;
data bus means having a data bus for transmitting data;
first data bus interface means for feeding a time multiplexed transport stream or streams output from the demodulating means or time multiplexed program streams obtained from the transport streams from the demodulating means;
second data bus interface means for receiving selected data signals from said data bus; and
recording means for receiving and recording time separated signals from different programs selected from program streams directly from said second data bus interface or after conversion into program streams of transport streams from said second data bus interface means.

2. A digital signal receiver according to claim 1 having third data bus interface means connected to said data bus for receiving signals from said first interface means via the data bus or from the recording means via the second interface means and the data bus; and having decoding means for decoding specific program signals from said third data bus interface means.

3. A digital signal receiver characterized by that it is provided with:
a plurality of demodulation means for selecting and demodulating a specific frequency band from transmitted digital signals so as to obtain a transport stream which is constructed by multiplexing a plurality of programs;
format conversion means for converting a plurality of transport streams from the demodulation means into program streams each having a single program;
data bus means having a data bus for transmitting data;
a plurality of first bus interface means for converting the program streams from the format conversion means into data formats corresponding to the data bus and outputting them to the data bus at different timings each; and
second bus interface means for converting the data which are sent by a multiplex transmission via the data bus into the original data formats and supplying them to a specific recording means.

4. A digital signal receiver characterized by that it is provided with:
a plurality of demodulation means for selecting and demodulating a specific frequency band from transmitted digital signals so as to obtain a transport stream which is constructed by multiplexing a plurality of programs;
format conversion means for converting a plurality of transport streams from the demodulation means into program streams each having a single program;
data bus means having a data bus for transmitting data;
a plurality of first bus interface means for converting the program streams from the format conversion means into data formats corresponding to the data bus and outputting them to the data bus at different timings each; and
fourth bus interface means for converting the data transmitted to the data bus from a plurality of the first bus interface means or the data transmitted to the data bus from third interface means into the data which have the same formats as the data formats of the program streams so as to supply a specific decoding means.

5. A digital signal receiver characterized by that it is provided with:
a plurality of demodulation means for selecting and demodulating a specific frequency band from transmitted digital signals so as to obtain a transport stream which is constructed by multiplexing a plurality of programs;
data bus means having data bus for transmitting data;
a plurality of first bus interface means for converting a plurality of the transport streams from the demodulation means into the data formats corresponding to the data bus and outputting them to the data bus at different timings;
third bus interface means for transmitting and receiving the data between the data bus, and converting the data formats between the data which are sent by a multiplex transmission via the data bus and the data which have the same formats as the data formats of the transport streams;
format conversion means for transmitting and receiving the data between the third bus interface means, transmitting and receiving the data between the specific recording/reproducing means, and converting the format between the data containing transport streams and the data containing at least one program stream which is consisted of a signal program; and
fourth bus interface means for converting the data transmitted to the data bus from a plurality of the first bus interface means or the data transmitted to the data bus from the third interface into the data which have the same formats as the data formats of the transport streams so as to supply a specific decoding means.

6. A digital signal receiver characterized by that it is provided with:
a plurality of demodulation means for selecting and demodulating a specific frequency band from transmitted digital signals so as to obtain a transport stream which is constructed by multiplexing a plurality of programs;
encoding means for producing new transport streams by a time division multiplex of a plurality of the transport streams obtained from the demodulation means;
data bus means having a data bus for transmitting the data;
first bus interface means for converting the transport streams from the encoding means into data formats corresponding to the data bus;
third bus interface means for transmitting and receiving the data between the data bus, and converting the data formats between the data which are sent by a multiplex transmission via the data bus and the data which have the same formats as the data formats of the transport streams;
format conversion means for transmitting and receiving the data between the third bus interface means, and also. between the specific recording/reproducing means, and converting the format between the data having a plurality of the transport streams and the data having at least one program stream which is consisted of a single program; and
fourth bus interface means for converting the data transmitted to the data bus from the first bus interface means or the data transmitted to the data bus from the third interface into the data which have the same formats as the data formats of the transport streams so as to supply a specific decoding means.

7. A digital signal receiver characterized by that it is provided with:
data bus means having a data bus for transmitting the data;
at least one receiving unit having a conversion means for converting transport streams constructed by multiplexing a plurality of programs which are obtained by selecting and demodulating the specific frequency bands from the transmitted digital signals into the program streams each having a simple program, and the first bus interface means for converting the output of the conversion means into the data formats which are data transmittable via the data bus;
at least one recording/reproducing unit having the third bus interface means for transmitting and receiving the data between the data bus and also between the specific recording/reproducing means, and converting the data formats between the data which are sent by a multiplex transmission via the data bus and the data having the same data formats as the program streams; and
at least one decoding unit having the fourth bus interface means for converting the data transmitted to the data bus from the at least one receiving unit or the data transmitted to the data bus from the at least one recording/reproducing unit into the data having the same formats as the program streams so as to supply them to the specific decoding means.

8. A digital signal receiver characterized by that it is provided with:
data bus means having data bus for transmitting the data;
at least one receiving unit having means for obtaining the transport streams constructed by multiplexing some programs by selecting and demodulating the specific frequency bands from the transmitted digital signals, and the first bus interface means for converting the outputs of the means mentioned above into the data formats which are data transmittable via the data bus;
at least one recording/reproducing unit having the third bus interface means for transmitting and receiving the data between the data bus, and converting the data formats between the data multiplexed trammeled via the data bus and the data having the same data formats as the transport streams, and means for transmitting and receiving the data between the third bus interface means, converting the format between the data containing the transport streams and the data containing at least one program stream which is constructed by simple programs, and transmitting and receiving the data between the specific recording/reproducing means; and
at least one decoding unit having the fourth bus interface means for converting the data transmitted to the data bus from the at least one receiving unit or the data transmitted to the data buses from at least one recording/reproducing unit into the data having the same formats as the transport streams so as to supply them to the specific decoding means.

9. A digital signal receiver characterized by that it is provided with:
data bus means having a data bus for transmitting the data;
at least one receiving unit having producing means for producing new transport streams by the time-division multiplex of the transport streams constructed by multiplexing some programs which are obtained by selecting and demodulating the specific frequency band from the transmitted digital signals, and the first bus interface means for converting the outputs of the producing means into the data formats which are data transmittable via the data bus;
at least one recording/reproducing unit having the third bus interface means for transmitting and receiving the data between the data bus, and converting the data formats between the data multiplexed trammeled via the data bus and the data having the same data formats as the transport streams, and means for transmitting and receiving the data between the third bus interface means, converting the format between the data containing the transport streams and the data containing at least one program stream which is consisted of a single program, and transmitting and receiving the data between the specific recording/reproducing means; and
at least one decoding unit having the fourth bus interface means for converting the data transmitted to the data bus from at least one receiving unit or the data transmitted to the data bus from at least one recording/reproducing unit into the data having the same formats as the transport streams so as to supply them to the specific decoding means.
